# EUROPEAN PATENT SPECIFICATION

(11) **EP 2 427 293 B1**
(45) Date of publication and mention of the grant of the patent: **25.03.2015**
(21) Application number: 10772332.2
(22) Date of filing: 14.04.2010
(51) Int. Cl.: B23C 5/28, B23C 5/08, B23C 5/26

(54) **MILLING TOOL WITH FLUID FLOW ARRANGEMENT**
FRÄSWERKZEUG MIT FLÜSSIGKEITSFLUSSANORDNUNG
OUTIL DE FRAISAGE À AMÉNAGEMENT D'ÉCOULEMENT DE FLUIDE

(30) Priority: 07.05.2009 SE 0950320
(43) Date of publication of application: 14.03.2012
(73) Proprietor: Seco Tools AB, SE-737 82 Fagersta (SE)
(72) Inventor: MICHELET, Benjamin, F-18000 Bourges (FR); FAUCHÈRE, Xavier, F-18110 Fussy (FR); DERIMAY, Pascal, F-18500 Mehun-sur-Yèvre (FR); RIVIÈRE, Bertrand, F-80100 Bourges (FR); AUZENAT, Francois, F-18000 Bourges (FR)
(74) Representative: Fröderberg, Anders Oskar
(86) International application number: PCT/SE2010/050402
(87) International publication number: WO 2010/128930

(56) References cited:
- EP-A1- 0 463 422
- WO-A1-99/30861
- DE-A1- 10 145 006
- GB-A- 820 308
- JP-A- 2002 066 830
- JP-A- 2006 218 549
- US-A1- 2008 063 482

## Description

### BACKGROUND AND SUMMARY

The present invention relates generally to milling tools and, more particularly, to milling tools having a fluid flow arrangement for fluids such as cooling and/or lubricating fluids.

In many rotating metal cutting machines, such as milling tools, a toolholder on which replaceable cutting inserts are mounted includes a mounting arrangement, such as an arbor mount, for securing the toolholder to a driven, rotating shaft of the machine.

It is known to deliver cooling and/or lubricating fluid to cool a workpiece and the cutting edges that are cutting the workpiece. Coolant and/or lubricant is delivered, typically under pressure, from a reservoir of coolant to a coolant chamber, such as a distributor groove, on the toolholder body by the mounting arrangement. Coolant is then delivered to a point proximate the cutting edges by drilling a hole between the coolant chamber and the point. In milling tools such as face milling tools, the shape of the toolholder permits holes to be drilled directly from points proximate the cutting edges to the coolant chamber proximate the mounting arrangement. EP 0 463 422 A1 provides an example of a face milling tool with coolant bores leading from an annular distributor groove in a mounting portion of a toolholder to chip grooves of the toolholder.

In certain milling tools such as disc milling tools, a relatively thin head in the form of a disc is arranged coaxially on an elongated shaft. The shaft can be of a type having a coolant chamber proximate a mounting arrangement and can be mounted to a driven, rotating shaft of the cutting machine in a conventional way, such as via an arbor mount. Particularly when the head or disc is thin, it may not be possible to drill a single hole from a coolant chamber proximate a mounting arrangement to a point proximate a cutting edge, particularly when the head or disc is remote from an end of the shaft forming part of the mounting arrangement and at which the coolant chamber is provided. JP2006218549 discloses an arrangement wherein a curved member is secured at the bottom of an axial passage to facilitate smooth flow to a radial passage. As seen, for example, in WO99/30861, it may, in addition, be difficult to provide a head
or disc that is sufficiently thin because of difficulty in finding a space for the head of a screw.

It is desirable to provide a milling cutter including an arrangement for providing cooling and/or lubricating fluid proximate the cutting edges on the head.

In accordance with the present invention, a milling tool as defined in claim 1 comprises a shaft portion comprising a first passage extending from a first end of the shaft portion, a head portion coaxial with the shaft portion, the head portion extending radially outwardly from the shaft portion, the head portion comprising two flank surfaces and an outer peripheral edge between the flank surfaces, the outer peripheral edge comprising at least one recess in which at least one cutting insert is mountable, and at least one second passage extending between and remote from the flank surfaces of the head portion from the first passage to proximate the at least one recess.
At least one second passage extends between and remote from the flank surfaces of the head portion from the first passage to proximate the at least one recess, wherein the first passage comprises a first portion having a first diameter and a second portion having a second diameter, and an annular rib and annular groove at a transition between the first portion and the second portion, the rib comprising at least one opening therein extending between the second portion and the groove.

### BRIEF DESCRIPTION OF THE DRAWINGS

The features and advantages of the present invention are well understood by reading the following detailed description in conjunction with the drawings in which like numerals indicate similar elements and in which:
FIG. 1 is a top, perspective view of a milling tool according to the present invention;
FIG. 2 is a bottom, exploded view of the milling tool of FIG. 1;
FIG. 3 is a side, cross-sectional view of a milling tool as seen in FIG. 1; and
FIG. 4 is a side, cross-sectional view of a portion of a milling tool according to another embodiment of the present invention.

### DETAILED DESCRIPTION

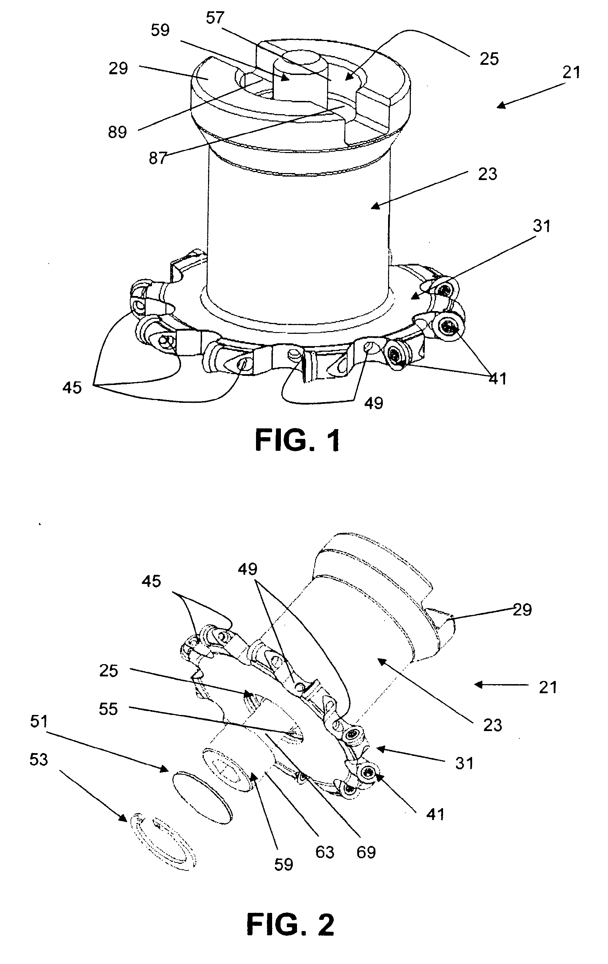

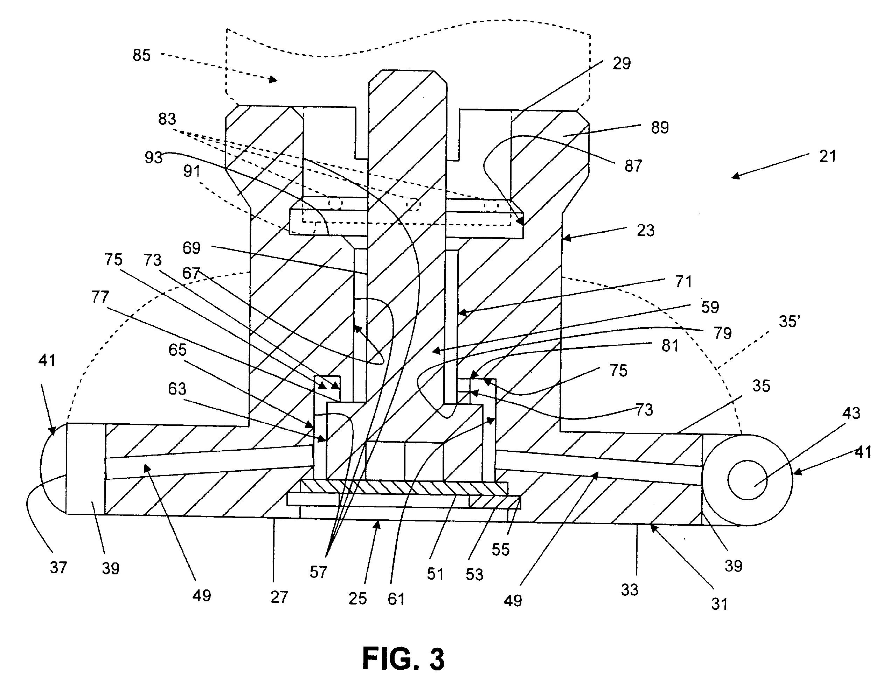

A milling tool 21 according to the present invention is shown in FIGS. 1-3. As seen, for example, in FIG. 3, the milling tool 21 comprises a shaft portion 23 comprising a first passage 25 extending from a first end 27 of the shaft portion.

Ordinarily, the first passage 25 extends axially from the first end 27 to a second end 29 of the shaft portion 23.

The milling tool 21 comprises a head portion 31 coaxial with the shaft portion 23. The head portion 31 extends radially outwardly from the shaft portion 23. The head portion 31 comprises two flank surfaces 33 and 35 and an outer peripheral edge 37 between the flank surfaces. The outer peripheral edge 37 comprises at least one recess 39, and ordinarily a plurality of recesses, in which at least one cutting insert 41 is mountable, such as via a clamping screw 43 with external threads that mate with internal threads in an opening 45 (FIGS. 1 and 2) in the body of the head portion 31, or some other form of clamping assembly. A variety of clamping arrangements for clamping inserts relative to heads are known. The head portions 31, 131 illustrated in FIGS. 1-4 are in the form of a disc with two substantially parallel flanks 35 and 33, and 135 and 133, however, it will be appreciated that the head portion can have non-parallel flanks. For example, as shown in phantom in FIG. 3, the flank 35' can be arcuate.

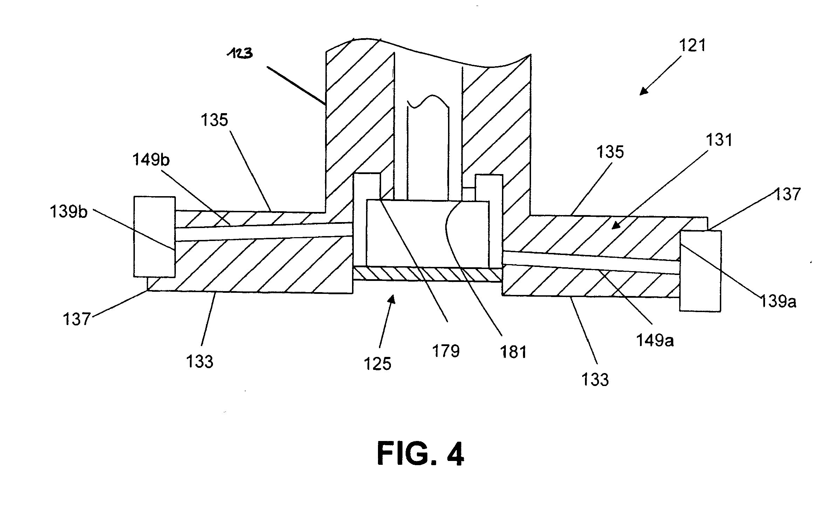

At least one second passage 49 extends between and remote from the flank surfaces 33 and 35 of the head portion 31 from the first passage 25 to proximate the at least one recess 39. The second passage 49 ordinarily extends to the recess 39 to a point slightly ahead of the cutting insert 41 in a direction of rotation of the milling tool 21. The second passage 49 can extend substantially radially relative to the axis of the shaft portion 23, although it may be arranged so that it does not extend radially relative to the axis of the shaft portion, such as by extending tangent to the first passage. The second passage 49 can be perpendicular or, as illustrated in FIGS. 3 and 4, non-perpendicular to the axis of the shaft portion 23, which can facilitate providing structure such as a disc 51 for closing the first passage 25. The disc 51 can be held in place in any suitable manner, such as by means of a circlip 53 received in a groove 55 in a wall 57 of the first passage 25.

In the embodiment of the milling tool 21 shown in FIGS. 1-3, a purpose of the first passage 25 is to receive a bolt 59 that is used to connect the milling tool 21 to a driven, rotatable portion of a cutting machine (not shown). The first passage 25 comprises a first portion 61 having a first diameter that is large enough to receive the head 63 of the bolt 59 and define a first annular space 65 between the head of the bolt and the wall 57 of the first passage. The first passage 25 also comprises a second portion 67 having a second diameter that is large enough to receive a shank end 69 of the bolt 59 and define a second annular space 71 between the shank end of the bolt and the wall 57 of the first passage. The diameter of the second portion 67 of the first passage is too small to allow the head 63 of the bolt to enter the second portion of the first passage. The bolt 59 can have an opening in its head 65 for insertion of a hex driver.

An annular rib 73 and an annular groove 75 are provided at a transition between the first portion 61 and the second portion 67. A bottom surface 77 of the head 63 of the bolt 59 abuts against a top abutment surface 79 of the rib 73 when the bolt is connected to the rotatable portion of the cutting machine so that the rib and the bolt head substantially prevent flow communication between the second annular space 71 in the second portion 67 of the first passage 25 and the groove 75. The groove 75 is in flow communication with the first annular space 65 in the first portion 61 of the first passage 25. The rib 73 comprises at least one opening 81 therein extending between the second portion 67 and the groove 75 so that flow communication is permitted between the second annular space 71 and the first annular space 65. The opening 81 can be in any suitable form, such as a hole through the rib 73 as seen in FIG. 3 or a recess 181 in the top abutment surface 179 of the rib as seen in FIG. 4. There is ordinarily a gap between the top of the head 63 of the bolt 59 and the disc 51.

Because flow communication exists between the first annular space 65 and the second annular space 71 via the opening 81 and the groove 75, cooling and/or lubricating fluid can be delivered to the second passage 49 from the second annular space. The second passage 49 extends to the first annular space 65 and, thus, cooling and/or lubricating fluid can be delivered to the recess 39 for cooling and/or lubricating the workpiece (not shown) and the cutting insert 41. Cooling and/or lubricating fluid is ordinarily delivered, typically under pressure, from a reservoir (not shown) to the second annular space 71 through conduits and openings provided on the cutting machine (not shown).

The cooling and/or lubricating fluid is delivered through openings 83 proximate an end 85 (shown in phantom in FIG. 3) of a mounting portion of the driven, rotatable portion of the cutting machine. A groove 87 can be provided in a mounting portion 89 of the first passage 25 and can form part of a coolant chamber. The bottom 91 of the end 85 of the mounting portion of the driven, rotatable portion of the cutting machine can be spaced from a transition 93 region between the mounting portion 89 of the first passage 25 and the second portion 67 of the first passage, or grooves can be provided in the bottom 91 of the end 85, so that fluid entering the coolant chamber can flow to second annular space 71 and then on to the opening 81 in the rib 73, the first annular space 65, and the second passage 49.

In the embodiments shown in FIGS. 1-3, the shaft portion 23 and the head portion 31 are integral, i.e., ordinarily meaning that they are formed from a common piece of material. Ordinarily, the head portion is disposed at the first end of the shaft portion. The shaft portion and the head portion may, however, be separate components and the head portion may be secured to the shaft portion at a variety of positions along its length in a suitable manner. Ordinarily, if the shaft portion and the head portion are separate components, parts of the second passage will be in the shaft portion and parts of the second passage will be in the head portion, and the head portion will have to be properly oriented relative to the shaft portion to ensure flow communication between the first passage and the recess in the peripheral edge of the head portion.

As seen in FIG. 4, at least one 139a recess can extend into the head portion 131 from a first one 133 of the flank surfaces of the head portion and does not extend to a second one 135 of the flank surfaces. Another recess 139b can extend into the head portion 131 from the second flank surface 135 and does not extend to the first flank surface 133. In such an arrangement, where the outer peripheral edge 137 comprises at least two recesses 139a and 139b, and the milling tool 121 comprises at least two second passages 149a and 149b, each of the at least two second passages extend from the first passage 125 to proximate respective ones of the recesses 139a and 139b between and remote from the flank surfaces 133 and 135 of the head portion 131. If the passages 149a and 149b lie in planes perpendicular to the axis of the shaft portion 123, a central axis of one of the passages 149a can lie on a different plane than a central axis of the other one of the passages 149b. Where the passages 149a and 149b are non-perpendicular to the central axis of the shaft portion 123, the central axes of the passages define different frustoconical surfaces as they rotate around the central axis of the shaft portion. To contrast the embodiment of FIG. 4 with that of FIG. 3, in FIG. 3, a recess 39 extends between both flanks 35 and 37. In still other embodiments, such as might be used in a face milling application, a recess can extend in from a bottom flank without extending to a top flank, and no recess extends in from a top flank.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A milling tool (21; 121), comprising:
a shaft portion (23) comprising a first passage (25; 125) extending from a first end (27) of the shaft portion (23);
a head portion (31; 131) coaxial with the shaft portion (23), the head portion (31; 131) extending radially outwardly from the shaft portion (23), the head portion (31; 131) comprising two flank surfaces (33, 35, 35'; 133, 135) and an outer peripheral edge (37; 137) between the flank surfaces (33, 35, 35'; 133, 135), the outer peripheral edge (37; 137) comprising at least one recess (39; 139a, 139b) in which at least one cutting insert (41) is mountable, wherein at least one second passage (49; 149a, 149b) extending between and remote from the flank surfaces (33, 35, 35'; 133, 135) of the head portion (31; 131) from the first passage (25; 125) to proximate the at least one recess (39; 139a, 139b); and wherein a bolt (59) extends along substantially an entire length of the first passage (25; 125); **characterized in** that a head (63) of the bolt (59) and a wall (57) of the first passage (25; 125) define an annular space (65).

2. The milling tool (21; 121) as set forth in claim 1, comprising a disc (51) for closing the first passage (25; 125) at the first end (27) of the shaft portion (23).

3. The milling tool (21; 121) as set forth in claim 1, wherein the first passage (25; 125) extends axially from the first end (27) to a second end (29) of the shaft portion (23).

4. The milling tool (21; 121) as set forth in claim 1, wherein the shaft portion (23) and the head portion (31; 131) are integral.

5. The milling tool (21; 121) as set forth in claim 1, wherein the head portion (31; 131) is disposed at the first end (27) of the shaft portion (23).

6. The milling tool (21; 121) as set forth in claim 1, wherein the outer peripheral edge (37; 137) comprises a plurality of recesses (39; 139a, 139b), at least one cutting insert (41) being mountable in each recess (39; 139a, 139b), the milling tool (21; 121) comprising at least one second passage (49; 149a, 149b) extending from the first passage (25; 125) to proximate each of the plurality of recesses (39; 139a, 139b) between and remote from the flank surfaces (33, 35, 35'; 133, 135) of the head portion (31; 131).

7. The milling tool (121) as set forth in claim 6, wherein at least one (139a) of the plurality of recesses (139a, 139b) extends into the head portion (131) from a first one of the flank surfaces (133) of the head portion (131) and does not extend to a second one of the flank surfaces (135).

8. The milling tool (121) as set forth in claim 7, wherein at least another one (139b) of the plurality of recesses (139a, 139b) extends into the head portion (131) from the second flank surface (135) and does not extend to the first flank surface (133).

9. The milling tool (21; 121) as set forth in claim 1, wherein the outer peripheral edge (37; 137) comprises at least two recesses (39; 139a, 139b), and the milling tool (21; 121) comprises at least two second passages, each of the at least two second passages extending from the first passage (25; 125) to proximate respective ones of the at least two recesses (39; 139a, 139b) between and remote from the flank surfaces (33, 35, 35'; 133, 135) of the head portion (31; 131).

10. The milling tool (121) as set forth in claim 9, wherein, as the at least two second passages (149a, 149b) are rotated about the central axis of the shaft portion, a first central axis of at least a first one (149a) of the at least two second passages defines a first frustoconical surface different from a second frustoconical surface defined by a central axis of another at least one (149b) of the at least two second passages.

11. The milling tool (21; 121) as set forth in claim 1, wherein the at least one second passage (49; 149a, 149b) extends substantially radially relative to the axis of the shaft portion.

12. The milling tool (21; 121) as set forth in claim 1, wherein the at least one second passage (49; 149a, 149b) is non-perpendicular to the axis of the shaft portion (23).

## Patentansprüche

1. Fräswerkzeug (21; 121), aufweisend:
einen Schaftabschnitt (23) mit einer ersten Durchführung (25; 125), die sich von einem ersten Ende (27) des Schaftabschnittes (23) erstreckt;
einen zu dem Schaftabschnitt (23) koaxialen und sich von dem Schaftabschnitt (23) radial nach Außen erstreckenden Kopfabschnitt (31; 131), wobei der Kopfabschnitt (31; 131) zwei Deckflächen (33, 35, 35'; 133,135) und einen äußeren umlaufenden Rand (37; 137) zwischen den Deckflächen (33, 35, 35'; 133, 135) aufweist, wobei der äußere umlaufende Rand (37; 137) zumindest eine Aussparung (39; 139a, 139b) aufweist, in den zumindest ein Schneideinsatz (41) montierbar ist, wobei sich zumindest eine zweite Durchführung (49; 149a, 149b) von der ersten Durchführung (25; 125) zwischen und beabstandet von den Deckflächen (33, 35, 35'; 133, 135) des Kopfabschnitts (31; 131) unmittelbar bis zu der zumindest einen Aussparung (39; 139a, 139b) erstreckt und wobei ein Bolzen (59) sich im Wesentlichen entlang der Gesamtlänge der ersten Durchführung (25; 125) erstreckt, **dadurch gekennzeichnet, dass** ein Kopf (63) des Bolzens (59) und eine Wand (57) der ersten Durchführung (25; 125) einen ringförmigen Raum (65) festlegen.

2. Fräswerkzeug (21; 121) nach Anspruch 1, welches eine Scheibe (51) zum Verschlieβen der ersten Durchführung (25; 125) an dem ersten Ende (27) des Schaftabschnitts (23) aufweist.

3. Fräswerkzeug (21; 121) nach Anspruch 1, wobei sich die erste Durchführung (25; 125) axial von dem ersten Ende (27) zu einem zweiten Ende (29) des Schaftabschnittes (23) erstreckt.

4. Fräswerkzeug (21; 121) nach Anspruch 1, wobei der Schaftabschnitt (23) und der Kopfabschnitt (31; 131) einstückig ausgeführt sind.

5. Fräswerkzeug (21; 121) nach Anspruch 1, wobei der Kopfabschnitt (31; 131) an dem ersten Ende (27) des Schaftabschnittes (23) angeordnet ist.

6. Fräswerkzeug (21; 121) nach Anspruch 1, wobei der äußere umlaufende Rand (37; 137) eine Mehrzahl von Aussparungen (39; 139a, 139b) aufweist, wobei zumindest ein Schneid-einsatz (41) in jeder Aussparung (39; 139a, 139b) montierbar ist, wobei das Fräswerkzeug (21; 121) zumindest eine zweite Durchführung (49; 149a, 149b) aufweist, die sich von der ersten Durchführung (25; 125) zwischen und beabstandet von den Deckflächen (33, 35, 35'; 133, 135) des Kopfabschnittes (31; 131) bis unmittelbar zu einer der Mehrzahl von Aussparungen (39; 139a, 139b) erstreckt.

7. Fräswerkzeug (121) nach Anspruch 6, wobei zumindest eine (139a) von der Mehrzahl von Aussparungen (139a, 139b) sich von einer ersten der Deckflächen (133) des Kopfabschnittes (131) in den Kopfabschnitt (131) und nicht bis zu der zweiten der Deckflächen (135) erstreckt.

8. Fräswerkzeug (121) nach Anspruch 7, wobei zumindest eine weitere (139b) der Mehrzahl von Aussparungen (139a, 139b) sich von der zweiten Deckfläche (135) in den Kopfabschnitt (131) und nicht bis zu der ersten Deckfläche (133) erstreckt.

9. Fräswerkzeug (21; 121) nach Anspruch 1, wobei der äußere umlaufende Rand (37; 137) zumindest zwei Aussparungen (39; 139a, 139b) und das Fräswerkzeug (21; 121) zumindest zwei zweite Durchführungen aufweist, wobei jede der zumindest zwei zweiten Durchführungen sich von der ersten Durchführung (25; 125) zwischen und im Abstand zu den Deckflächen (33, 35, 35'; 133, 135) des Kopfabschnitts (31; 131) bis unmittelbar an die zugehörige der zumindest zwei zweiten Aussparungen (39; 139a, 139b) erstreckt.

10. Fräswerkzeug (121) nach Anspruch 9, wobei dann, wenn die zumindest zwei zweiten Durchführungen (149a, 149b) um eine Mittelachse des Schaftabschnittes gedreht werden, eine erste Mittelachse von zumindest einer ersten (149a) der zumindest zwei zweiten Durchführungen eine erste Kegelstumpffläche definiert, die sich von einer zweiten Kegelstumpffläche unterscheidet, die durch eine Mittelachse von zumindest einer weiteren (149b) der zumindest zwei zweiten Durchführungen festgelegt ist.

11. Fräswerkzeug (21; 121) nach Anspruch 1, wobei die zumindest eine zweite Durchführung (49; 149a, 149b) sich im Wesentlichen radial bezüglich der Achse des Schaftabschnitts erstreckt.

12. Fräswerkzeug (21; 121) nach Anspruch 1, wobei die zumindest eine zweite Durchführung (49; 149a, 149b) nicht senkrecht zu der Achse des Schaftabschnittes (23) verläuft.

## Revendications

1. Outil de fraisage (21 ; 121), comprenant :
une partie d'arbre (23) comprenant un premier passage (25, 125) s'étendant à partir d'une première extrémité (27) de la partie d'arbre (23),
une partie de tête (31, 131) coaxiale par rapport à la partie d'arbre (23), la partie de tête (31, 131) s'étendant radialement vers l'extérieur par rapport à la partie d'arbre (23), la partie de tête (31, 131) comprenant deux surfaces de flancs (33, 35, 35' ; 133, 135) et un bord périphérique extérieur (37 ; 137) entre les surfaces de flancs (33, 35, 35' ; 133, 135), le bord périphérique extérieur (37 ; 137) comprenant au moins un évidement (39 ; 139a, 139b) dans lequel au moins un insert de coupe (41) peut être monté, dans lequel au moins un deuxième passage (49 ; 149a, 149b) s'étendant entre les surfaces de flancs (33, 35, 35' ; 133, 135) de la partie de tête (31 ; 131), et à distance de celles-ci, à partir du premier passage (25 ; 125) pour approcher le au moins un évidement (39 ; 139a, 139b), et dans lequel un boulon (59) s'étend le long de pratiquement toute la longueur du premier passage (25 ; 125), **caractérisé en ce qu'**une tête (63) du boulon (59) et une paroi (57) du premier passage (25 ; 125) définissent un espace annulaire (65).

2. Outil de fraisage (21 ; 121) selon la revendication 1, comprenant un disque (51) destiné à fermer le premier passage (25 ; 125) au niveau de la première extrémité (27) de la partie d'arbre (23).

3. Outil de fraisage (21 ; 121) selon la revendication 1, dans lequel le premier passage (25 ; 125) s'étend axialement de la première extrémité (27) à une deuxième extrémité (29) de la partie d'arbre (23).

4. Outil de fraisage (21 ; 121) selon la revendication 1, dans lequel la partie d'arbre (23) et la partie de tête (31 ; 131) sont solidaires.

5. Outil de fraisage (21 ; 121) selon la revendication 1, dans lequel la partie de tête (31 ; 131) est disposée au niveau de la première extrémité (27) de la partie d'arbre (23).

6. Outil de fraisage (21 ; 121) selon la revendication 1, dans lequel le bord périphérique extérieur (37 ; 137) comprend une pluralité d'évidements (39 ; 139a, 139b), au moins un insert de coupe (41) pouvant être monté dans chaque évidement (39 ; 139a, 139b), l'outil de fraisage (21 ; 121) comprenant au moins un deuxième passage (49 ; 149a, 149b) s'étendant à partir du premier passage (25 ; 125) pour approcher chaque évidement de la pluralité d'évidements (39 ; 139a, 139b) entre les surfaces de flancs (33, 35, 35' ; 133, 135) de la partie de tête (31 ; 131) et à distance de celles-ci.

7. Outil de fraisage (121) selon la revendication 6, dans lequel au moins un premier (139a) de la pluralité d'évidements (139a, 139b) s'étend dans la partie de tête (131) à partir d'une première des surfaces de flancs (133) de la partie de tête (131) et ne s'étend pas sur une deuxième des surfaces de flancs (135).

8. Outil de fraisage (121) selon la revendication 7, dans lequel au moins un autre (139b) de la pluralité d'évidements (139a, 139b) s'étend dans la partie de tête (131) à partir de la deuxième surface de flanc (135) et ne s'étend pas sur la première surface de flanc (133).

9. Outil de fraisage (21 ; 121) selon la revendication 1, dans lequel le bord périphérique extérieur (37 ; 137) comprend au moins deux évidements (39 ; 139a, 139b), et l'outil de fraisage (21 ; 121) comprend au moins deux deuxièmes passages, chacun des au moins deux deuxièmes passages s'étendant à partir du premier passage (25 ; 125) pour approcher des évidements respectifs parmi les au moins deux évidements (39 ; 139a, 139b) entre les surfaces de flancs (33, 35, 35' ; 133, 135) de la partie de tête (31 ; 131) et à distance de celles-ci.

10. Outil de fraisage (121) selon la revendication 9, dans lequel, lorsque les au moins deux deuxièmes passages (149a, 149b) tournent autour de l'axe central de la partie d'arbre, un premier axe central d'au moins un premier (149a) des au moins deux deuxièmes passages définit une première surface tronconique différente d'une deuxième surface tronconique définie par un axe central d'au moins un autre (149b) des au moins deux deuxièmes passages.

11. Outil de fraisage (21 ; 121) selon la revendication 1, dans lequel le au moins un deuxième passage (49 ; 149a, 149b) s'étend globalement radialement par rapport à l'axe de la partie d'arbre.

12. Outil de fraisage (21 ; 121) selon la revendication 1, dans lequel le au moins un deuxième passage (49 ; 149a, 149b) n'est pas perpendiculaire à l'axe de la partie d'arbre (23).
